# EUROPÄISCHE PATENTSCHRIFT

(11) **EP 3 660 344 B1**
(45) Veröffentlichungstag und Bekanntmachung des Hinweises auf die Patenterteilung: **30.06.2021**
(21) Anmeldenummer: 19211208.4
(22) Anmeldetag: 25.11.2019
(51) Int. Cl.: F16C 23/08, F16C 33/46, F16C 33/48, F16C 33/49

(54) **VERFAHREN ZUR HERSTELLUNG EINES PENDELROLLENLAGERKÄFIGS UND EINES NACH DEM VERFAHREN HERGESTELLTEN WÄLZLAGERKÄFIGS**
METHOD FOR THE MANUFACTURING OF A SPHERICAL ROLLER BEARING CAGE AND A ROLLING BEARING CAGE MANUFACTURED BY THE METHOD
PROCEDE DE PRODUCTION D'UNE CAGE DE ROULEMENT A ROULEAUX SPHERIQUES ET CAGE DE ROULEMENT PRODUITE SELON CE PROCEDE

(30) Priorität: 27.11.2018 DE 102018129894
(43) Veröffentlichungstag der Anmeldung: 03.06.2020
(73) Patentinhaber: Schaeffler Technologies AG & Co. KG, 91074 Herzogenaurach (DE)
(72) Erfinder: Bierlein, Andreas, 97437 Haßfurt (DE); Schröder, Rainer, 97440 Egenhausen (DE)

(56) Entgegenhaltungen:
- DE-A1-102016 202 919
- US-A- 3 290 102

## Beschreibung

### Technisches Gebiet

Die Erfindung befasst sich mit der Herstellung von Wälzlagerkäfigen für Pendelrollenlager und nach diesem Verfahren hergestellten Wälzlagerkäfigen.

Allgemein bekannt ist, dass Wälzkörper, wenn sie zwischen den beiden Lagerringen angeordnet sind, von Wälzlagerkäfigen geführt werden. Diese Wälzlagerkäfige weisen zu diesem Zweck Taschen auf, in die die Wälzkörper eingesetzt werden. (s. z.B. US 3 290 102 A) Je nach Anwendungsart sind diese Wälzlagerkäfige entweder an den Borden der Lageringe oder auch auf den Wälzkörpern geführt. Im ersten Fall spricht man von einer Bordführung und im zweiten Fall von einer Wälzkörperführung.

Wälzlagerkäfige sind allgemein aus Metall oder Kunststoff gebildet. Während bei Wälzlagerkäfigen die erforderlichen Taschen in der Regel gleich mit dem Spritzvorgang eingebracht werden, müssen bei Wälzlagerkäfigen aus Metall diese Taschen durch nachfolgende Bearbeitungsschritte in den jeweiligen Käfigrohlingen hergestellt werden, da bekannte Metallgussverfahren nicht geeignet sind, Wälzlagerkäfige bzw. deren Taschen in der gewünschten Genauigkeit und/oder Oberflächengüte herzustellen. Handelt es sich um Wälzlagerkäfige, die aus Blech gebildet werden, werden die notwendigen Taschen in der Regel durch Stanzen hergestellt. Da Blechkäfige aber nur bei geringen Belastungen des Wälzlagers zuverlässig eingesetzt werden können, werden für höhere Wälzlagerbelastungen in der Regel rohrförmige Käfigrohlinge aus beispielsweise Messing oder Eisenguss verwendet, in welchen dann durch Fräsen die erforderlichen Taschen herausgearbeitet werden. Dazu werden allgemein Fingerfräser eingesetzt, mit welchen die Konturen der zu bildenden Taschen abgefahren werden. Wie leicht einzusehen ist, ist das Abfahren der Konturen der zu bildenden Taschen mit erheblichem Zeitaufwand verbunden.

Oftmals müssen auch verschiedene Fingerfräser eingesetzt werden, um die gewünschte Taschenkontur herzustellen, was entsprechende hohe Rüstzeiten zur Folge hat.

Dies insbesondere dann, wenn die in Taschen eingesetzten Wälzkörper eines wälzkörpergeführten Wälzlagerkäfigs nach der Montage dort selbsthaltend angeordnet bleiben sollen. Denn um diese zu realisiere, müssen die Taschen an ihrer radialen Innenseite als auch an ihrer radialen Außenseite Einschnürungen aufweisen, die in die Taschen eingesetzte Wälzkörper an radial entgegengesetzten Seiten umgreifen.

Daher liegt der Erfindung die Aufgabe zugrunde, ein vereinfachtes Verfahren zur Ausbildung eines wälzlagergeführten Wälzlagerkäfigs eines Pendelrollenlagers anzugeben.

Diese Aufgabe wird mit den in Anspruch 1 angegebenen Merkmalen gelöst. Vorteilhafte Aus- und Weiterbildungen der Erfindung sind den Ansprüchen 2 bis 6 entnehmbar. Ein nach dem Verfahren hergestellter Wälzlagerkäfig sowie ein, einen solchen Wälzlagerkäfig enthaltendes Pendelrollenlager finden sich in den Ansprüchen 7 und 8.

Ausgegangen wird von der Bereitstellung eines rohrförmigeren Käfigrohlings mit einem ersten und einem zweiten Rand und einem inneren und einem äußeren Umfangsrand und eines Fräsers, wobei der Fräser einen Antriebsschaft und Schneidflächen aufweist.

Wird der Fräser, welcher einen axial an den Antriebsschaft anschließenden ersten Konus, einen an die Großdurchmesserseite des ersten Konus anschließenden ersten Zylinder, einen zweiten Konus, dessen Großdurchmesserseite in Richtung der Großdurchmesserseite des ersten Konus weist, und einem zweiten Zylinder, welcher gegenüber dem Durchmesser D1 des ersten Zylinders einen verminderten Durchmesser D3 hat und welcher innerhalb der axialen Erstreckung des ersten Zylinders zwischen den beiden Großdurchmesserseiten der beiden Konen angeordnet ist, hat, und welcher mindestens an den Mantelflächen der beiden Konen und der beiden Zylinder Schneidflächen bereitstellt, radial solange gegen die Mittelachse des Käfigrohlings verfahren wird, bis die Drehachse DA des Fräsers eine Position eingenommen hat, die zwischen dem inneren und dem äußeren Umfangsrand des Käfigrohlings liegt, dann in der im Käfigrohling eingetauchten Position axial gegen den zweiten Rand verfahren wird, anschließend wieder gegen den ersten Rand verfahren wird, bis dieser wieder eine Position eingenommen hat, den dieser vor dem axialen Verfahren gegen den zweiten Rand hatte, und wieder radial aus dem Käfigrohling herausgefahren, wird die erforderliche Taschenkontur quasi in einem Zug mit nur einem Fräser hergestellt. Dadurch, dass die Drehachse des Fräsers nicht vollständig die Dicke zwischen dem inneren und äußeren Umfangsrand des Käfigrohlings beim radialen Absenken durchfährt, erhält nicht nur der Bereich des Käfigrohlings, der unterhalb der Drehachse DA des Fräsers liegt, eine gerundete, den lichten Querschnitt einschnürende Rampen, die später den im Wälzlager verbauten Wälzlagerkäfig auf den Wälzkörpern führen, sondern auch der oberhalb der Drehachse des Fräser liegende Bereich des Käfigrohlings, indem die als Folge des durchmesserkleineren zweiten Zylinders nach dem radialen Hereinfahren des Fräsers verbleibende Ringschulter durch das axiale Verfahren des Fräsers mittels des durchmessergrößeren ersten Zylinders eine gerundete Innenkontur erhält, die bei einem in eine solche Tasche eingebrachten Wälzkörper diesen gegen radiales Herausfallen nach außen sichert. Da die axiale Breite der Ringschulter nur gering ist, lassen sich gegen den Widerstand der Ringschulter von radial außen Wälzkörper in die so gebildeten Taschen problemlos einschnappen.

Eine symmetrische Taschenform ist gegeben, wenn der zweite Zylinder des Fräsers unmittelbar an die Großdurchmesserseite des zweiten Konus des Fräsers anschließt,
dass die axiale Breite L1 des ersten Zylinders der axialen Breite L2 des zweiten Zylinders entspricht, und der Fräser axial gegen den zweiten Rand um das Maß der axialen Breite L1 verfahren wird.

Hinterschneidungen an Taschen werden vermieden, wenn die Eindringtiefe T der Drehachse DA des Fräsers gleich oder kleiner dem Durchmesser D5 der Konen an deren Kleindurchmesserseite ist.

Ist die Mantelfläche des axial an die Kleindurchmesserseite des ersten Konus anschließenden Antriebsschafts 7 ebenfalls mit einer Schneidfläche S versehen, furcht sich der Antriebsschaft bei der Radialbewegung des Fräsers selbst seinen Weg im Käfigrohling.

Der Zerspanungsleistung ist verbessert, wenn auch die beiden Stirnflächen des ersten Konus und zumindest die Kleindurchmesserstirnfläche des zweiten Konus Schneidflächen S aufweist.

Die Fräsarbeit ist reduziert, wenn der Käfigrohling vorgebildete Taschen aufweist, die etwas kleiner sind als die endgültigen Abmessungen der Taschen,, die mittels des Fräsers eingebracht werden.

### Kurze Beschreibung der Figuren

Es zeigen:
- Fig.1a-d: vier Bearbeitungsstufen eines Wälzlagerkäfigs im Seitenschnitt;
- Fig.2: eine Bearbeitungsstufe eines weiteren Wälzlagerkäfigs;
- Fig. 3a-e: Schnitte gemäß Fig. 1a-d und Fig. 2
- Fig. 4: einen weiteren Käfigrohling im Seitenschnittt;
- Fig. 5: einen weiteren Fräser; und
- Fig. 6: ein Pendelrollenlager

### Wege zum Ausführen der Erfindung

Die Erfindung soll nun anhand der Figuren näher erläutert werden.

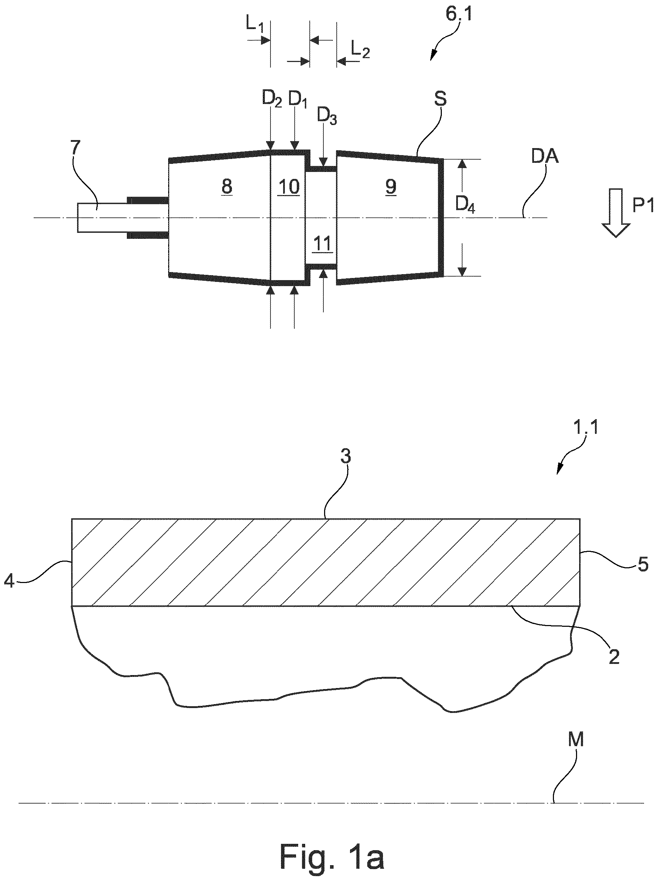

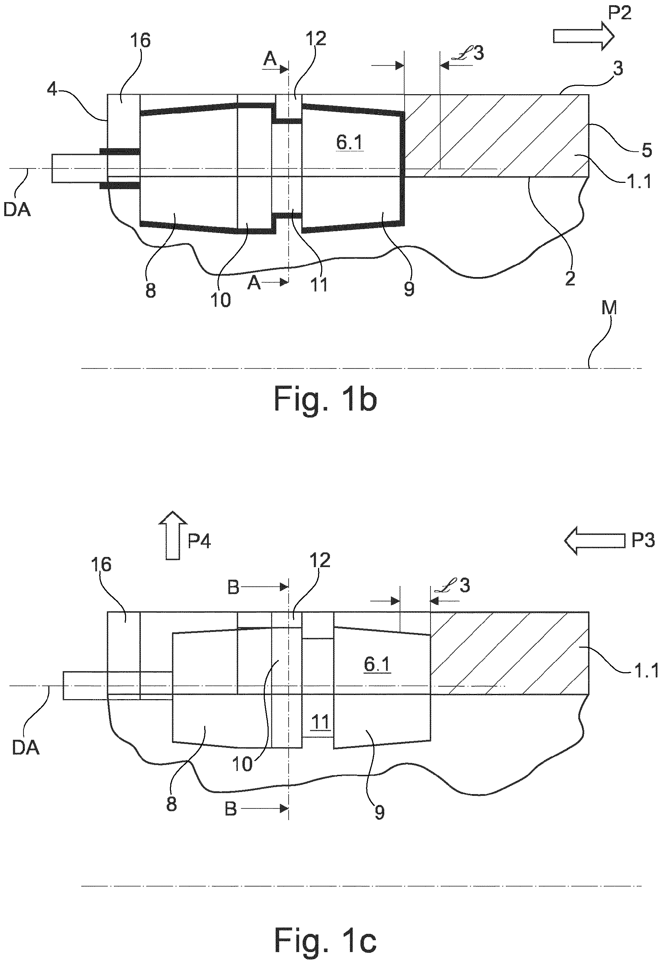

In Fig.1a ist ein rohrförmiger Käfigrohling 1.1 gezeigt, welcher aus einem üblichen Käfigwerkstoff gebildet ist und welcher einen ersten, inneren und einen zweiten, äußeren Umfangsrand 2, 3 aufweist. Ferner wird der Käfigrohling 1.1 seitlich von einem ersten Rand 4 und einem zweiten Rand 5 begrenzt. Dieser Käfigrohling ist massiv aus Metall oder einem anderen Käfigwerkstoff, wie beispielsweise Kunststoff, gebildet. Oberhalb des Käfigrohlings 1 ist ein Fräser 6.1 angeordnet, welcher einen Antriebschaft 7, einen ersten Konus 8, einen zweiten Konus 9, einen ersten Zylinder 10 und einen zweiten Zylinder 11 aufweist. Dabei schließt axial an den Antriebsschaft 7, der erste Konus 8 mit seiner Kleindurchmesserseite an. Die Großdurchmesserseite des ersten Konus 8 geht in den ersten Zylinder 10 über, wobei der Durchmesser D1 des ersten Zylinders 10 und der Durchmesser D2 an der Großdurchmesserseite des ersten Konus 8 gleich groß sind. An die Seite des ersten Zylinders 10, welche der Großdurchmesserseite des ersten Konus 8 abgewandt ist, schließt der zweite Zylinder 11 an, welcher gegenüber dem Durchmesser D1 des ersten Zylinders 10 einen kleineren Durchmesser D3 hat. Der zweite Konus 9, welcher die gleichen Abmessungen wie der erste Konus 8 hat, schließt mit seiner Großdurchmesserseite unmittelbar an den zweiten Zylinder 11. Die Durchmesser der Kleindurchmesserseiten der beiden Konen sind mit D4 bezeichnet. Sowohl der Antriebsschaft 7, die beiden Konen 8, 9 und als auch die beiden Zylinder 10, 11 sind zentrisch zur gezeigten Drehachse DA angeordnet. Außerdem ist in dem im Zusammenhang mit dem in den Fig.1a bis d gezeigten Ausführungsbeispiel die axiale Länge L1 des ersten Zylinders 10 gleich der axialen Länge L2 des zweiten Zylinders 10. Mit den dick ausgezogenen Linien in Fig. 1a und b ist angedeutet, dass die so gekennzeichneten Mantelflächen des Fräsers 6.1 als Schneidflächen S ausgebildet sind. Natürlich können in einem weiteren -nicht gezeigten- Ausführungsbeispiel zur Hebung der Zerspanungsleistung auch die kleine Stirnfläche des ersten Konus 8 und der Ringrand an der großen, an der Großdurchmesserseite liegenden Stirnfläche des zweiten Konus 9 als Schneidflächen S ausgebildet sein.

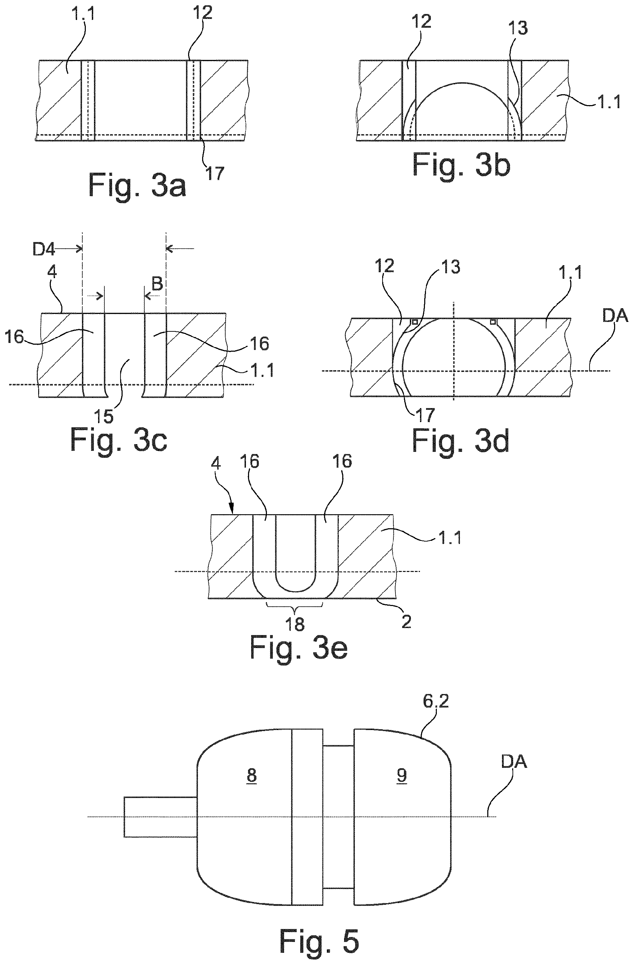

Wird ausgehend von Fig. 1a der Fräser 6.1 in Pfeilrichtung P1 auf den Käfigrohling 1.1 in Richtung seiner Mittelachse M abgesenkt, wird Material des Käfigrohlings 1.1 weggefräst und es stellen sich die in Fig. 1b gezeigten Verhältnisse ein. Wesentlich beim radialen Verfahren des Fräsers 6.1 gegen den Käfigrohling 1.1 ist, dass die Drehachse DA am Ende des radialen Verfahrens eine Position einnimmt, die zwischen dem inneren Umfangsrand 2 und dem äußeren Umfangsrand 3 liegt. Bei der Ausführungsform gemäß Fig. 1b ist dies so realisiert, dass die Drehachse DA des Fräsers 6.1 zum inneren Umfangsrand 2 einen wesentlich geringeren Abstand als zum äußeren Umfangsrand 3 einnimmt. Fig. 3a, welche einen Schnitt AA gemäß Fig. 1b durch den Käfigrohling 1.1 ohne Fräser 6.1. zeigt, ist entnehmbar, dass als Folge des durchmesserkleineren zweiten Zylinders 11 beim Bewegen des Fräsers 6.1. Pfeilrichtung P1 (Fig. 1a) eine Ringschulter 12 gebildet wird.

Ausgehend von der in Fig. 1b gezeigten Position des Fräsers 6.1 wird dieser dann in Pfeilrichtung P2 axial gegen den zweiten Rand 5 des Käfigrohlings 1.1 verfahren, und zwar über eine Länge L3, die der Länge L1 bzw. L2 des ersten bzw. zweiten Zylinders 10, 11 entspricht. Durch die axiale Bewegung in Pfeilrichtung P2 wird, wie Fig. 1c zeigt, in die Ringschulter 12, die nach Beendigung der Radialbewegung des Fräsers 6.1 in Pfeilrichtung P1 wegen des geringen Durchmessers D3 des zweiten Zylinders 11 stehengeblieben war, durch den ersten Zylinder 10 in die Ringschulter 12 eine Innenkontur 13 des Durchmessers D1 eingebracht, wie Fig. 3b zeigt, welche einen Schnitt BB gemäß Fig. 1c zeigt.

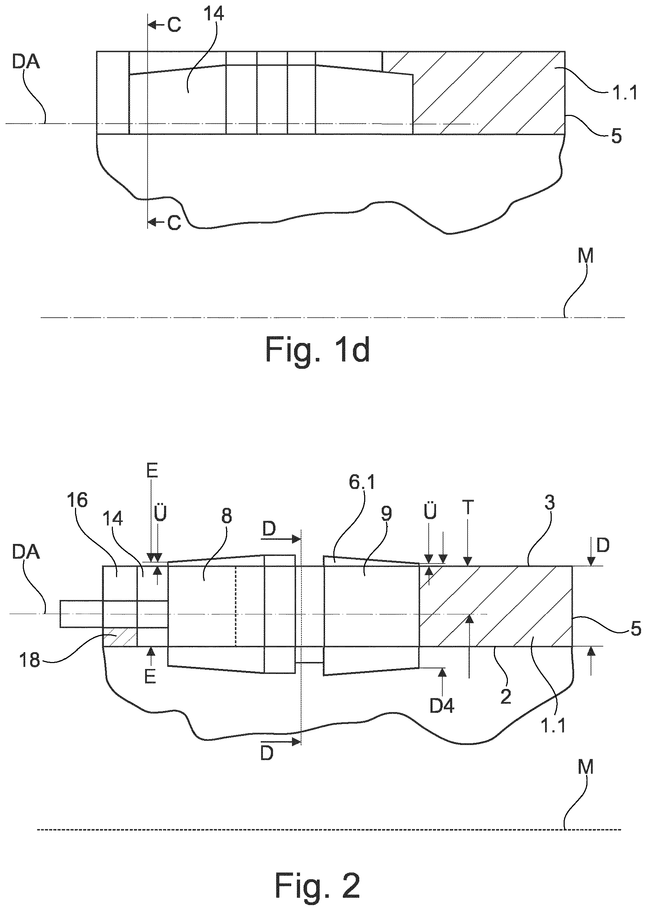

Ist die Innenkontur 13 in der Ringschulter 12 durch Bewegung in Pfeilrichtung P2 ausgebildet, wird der Fräser 6.1 in Pfeilrichtung P3 (Fig. 1c) wieder in die Position zurückgefahren, die er gemäß Fig. 1b vor der Bewegung in Pfeilrichtung P2 hatte. Ist diese Position erreicht wird, wird dann der Fräser 6.1 in Pfeilrichtung P4 (Fig. 1c) radial aus dem entsprechenden den zuvor erläuterten Schritten bearbeiteten Käfigrohling 1.1 herausgefahren. Diese Verhältnisse sind in Fig. 1d veranschaulicht, welche eine durch Anwendung der vorstehend erläuterten Schritte gefräste Tasche 14 zur Aufnahme eines Wälzkörpers eines Pendelrollenlagers zeigt (letzteres nicht gezeigt).

Fig. 3c, welche einen Schnitt CC gemäß Fig. 1d zeigt, ist entnehmbar, dass durch die Radialbewegung des Fräsers 6.1 in Pfeilrichtung P1 (Fig.1a) in den ersten Rand 4 des Käfigrohlings 1.1 vom Antriebsschaft 7, der wie schon im Zusammenhang mit Fig. 1a erläutert, an seiner Mantelfläche mit einer Schneidstruktur S versehen ist, eine Einfräsung 15 eingebracht wird, deren Breite B schmaler ist als der Durchmesser D4 der Kleindurchmesserseite des ersten Konus 8. Dadurch werden seitliche Lappen 16 bereitgestellt, die sicherstellen, dass in die gebildeten Taschen 14 eingelegte Wälzkörper (nicht gezeigt) nicht in Pfeilrichtung P3 aus den Taschen 14 heraustreten können.

Das Ausführungsbeispiel, welches in Fig. 2 gezeigt ist, unterscheidet sich von dem zusammen mit den Fig. 1a bis d gezeigten Ausführungsbeispiel dadurch, dass der Fräser 6.1 weit weniger tief radial in den Käfigrohling 1.1 eindringt. Dies ist in Fig. 2 dadurch angedeutet, dass die Drehachse DA des Fräsers 6.1 am Ende der Radialbewegung P1 nur etwa zu 60% der radialen DickeD des Käfigrohlings 1.1 in diese eingedrungen ist. Da im Ausführungsbeispiel gemäß Fig. 2 der der halbe Durchmesser D4 an der Kleindurchmesserseite der Konen 8, 9 größer der Eindringtiefe T der Drehachse DA in dem Käfigrohling 1.1 ist, haben beide Konen 8, 9 einen geringen Überstand Ü bezogen auf den äußeren Umfangsrand 3 des Käfigrohlings 1.1. Wird nun im Ausführungsbeispiel gemäß Fig. 2 der Fräser 6.1 entsprechend Fig. 1b in Pfeilrichtung P2 gegen den zweiten Rand 5 verfahren, bewirkt der Überstand Ü am zweiten Konus 9 eine hinterschneidungsfreie Ausbildung des mit Blick auf die Fig. 2 rechten Teils der Tasche 14. Die geringere Eindringtiefe T des Fräsers 6.1 bewirkt außerdem, dass im Vergleich zum Ausführungsbeispiel gemäß den Fig. 1a bis d eine wesentlich größere, unterhalb der Drehachse DA liegende Anlauffläche 17 zur Verfügung gestellt wird (Fig. 3d), mit welcher -wie bei einem wälzkörpergeführten Käfig üblich- der Käfig an den Wälzkörpern anläuft und von diesen geführt wird. Wie auch schon in Fig. 3b gezeigt, bildete auch im Ausführungsbeispiel gemäß Fig. 2 die durch die axiale Bewegung des Fräsers 6.1 in Pfeilrichtung P2 Innenkontur 13 an der Ringschulter 12 eine Einschnürung , die zwar ein Einklipsen von Wälzkörpen in die Taschen 14 erlaubt, aber ein Herausfallen nach dem Einklipsen verhindert. Letztes ist in Fig. 3d gezeigt, welche eine Sicht in eine gebildete Tasche 14 ohne Fräser 6.1 entsprechend dem Schnitt DD gemäß Fig. 2 zum Gegenstand hat. Wie Fig. 3e, welche einen Schnitt EE gemäß Fig. 2 zeigt, entnehmbar ist, werden durch die Radialbewegung in Pfeilrichtung P1 nicht nur am ersten Rand 4 des Käfigrohlings 1.1 Lappen 16 bereitgestellt. Vielmehr bleibt auch durch die im Ausführungsbeispiel gemäß Fig. 2 geringere Eindringtiefe T des Fräsers 6.1 in den Käfigrohling 1.1 am inneren Umfangsrand des Randes 4 eine Überbrückung 18 erhalten, mit welcher der innere Umfangsrand 2 trotz des Einbringens von Taschen 14 insgesamt verbunden bleibt. Diese Überbrückungen 18 stellen sicher, dass sich der so ausgebildete Käfigrohling 1.1 in Umfangsrichtung nicht aufweiten kann, wenn er in einem Wälzlager zur Führung von Wälzkörpern eingesetzt wird.

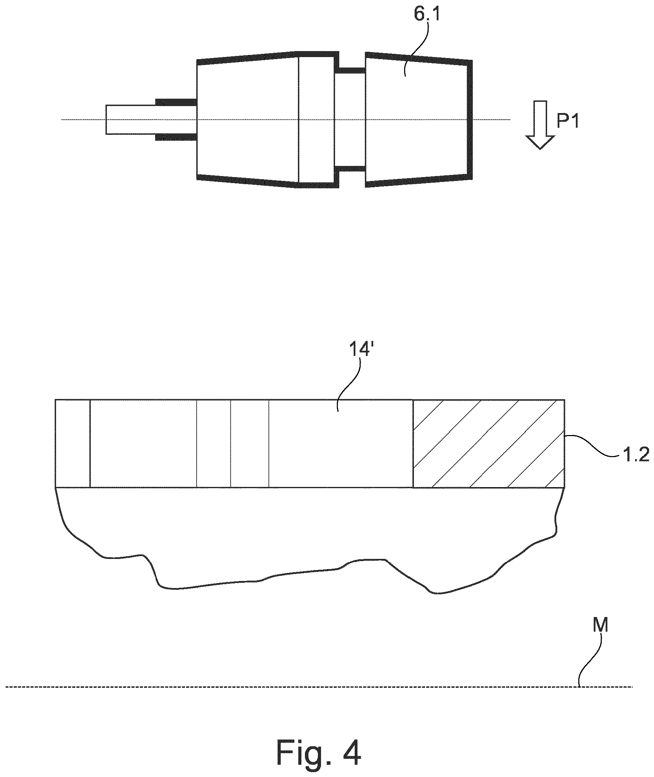

Auch wenn in den bisher beschriebenen Ausführungsbeispielen immer von einem massiven Käfigrohling 1.1 ausgegangen wurde, in welchen die Taschen 14 eingefräst wurden, so ist die Erfindung nicht darauf festgelegt. Wie Fig. 4 zeigt, kann der Käfigrohling 1.2 auch bereits vorgebildete Taschen 14' haben, die gegenüber den endbearbeiteten Taschen 14 etwas kleiner sind. Solche vorgebildeten Taschen 14' können beispielsweise dadurch zur Verfügung gestellt werden, dass der Käfigrohling 1.2 als Gussteil mitsamt der vorgebildeten Taschen 14' hergestellt wird. Wie leicht einzusehen ist, wird durch vorgebildete Taschen 14' die Fräsarbeit erheblich reduziert.

In Fig. 5 ist ein weiterer Fräser 6.2 zur Ausführung des Verfahrens gezeigt, dessen Mantelfläche der beiden Konen 8, 9 in Axialrichtung nicht wie den bisherigen Ausführungsbeispielen einen geraden, sondern einen gebogenen Verlauf hat. Auch können in einem anderen -nicht gezeigten- Ausführungsbeispiel bei einem Fräser 6.1 entsprechend Fig. 1a -c oder Fig. 2 die Übergänge zwischen den Konen 8, 9 zu den Zylindern 10, 11 sowie die Übergänge zwischen den beiden Zylindern 10, 11 gerundet ausgebildet sein.

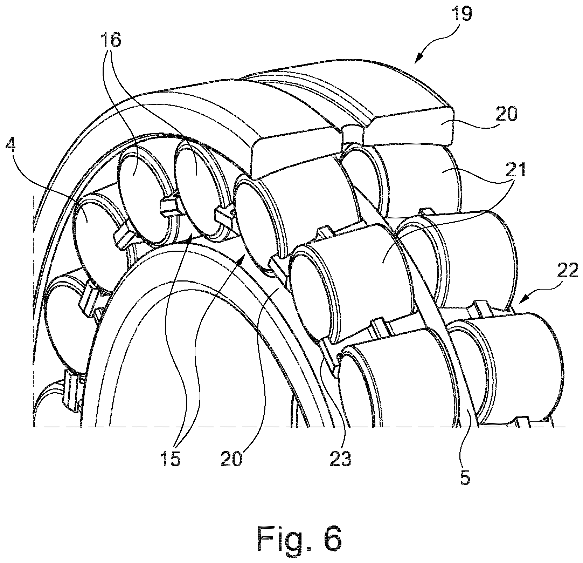

Fig. 6 zeigt ein zweireihiges Pendelrollenlager 19, bei welchem zwischen außenbordfreien Lagerringen 20 sphärische Wälzkörper 21 angeordnet sind und von einem erfindungsgemäß hergestellten Wälzlagerkäfig 22 geführt werden, der entsprechend dem Ausführungsbeispiel gemäß Fig. 1a bis d hergestellt wurde. Deutlich ist dieser Darstellung entnehmbar, dass vom zweiten Rand 5 dieses Wälzlagerkäfigs 22 axial verlaufende Stege 23 ausgehen. Dadurch, dass dieser Wälzlagerkäfig 22 gemäß dem Ausführungsbeispiel entsprechend den Fig. 1a bis d gebildet wurde, durchtrennen die Einfräsungen 15 den ersten Rand 4 vollständig, so dass die Wälzkörper 21 am ersten Rand 4 nur von den Lappen 16 gesichert werden.

### Bezugszeichenliste

- 1.n: rohrförmiger Käfigrohling
- 2: innerer Umfangsrand
- 3: äußerer Umfangsrand
- 4: erster Rand
- 5: zweiter Rand
- 6: Fräser
- 7: Antriebsschaft
- 8: erster Konus
- 9: zweiter Konus
- 10: erster Zylinder
- 11: zweiter Zylinder
- 12: Ringschulter
- 13: Innenkonur
- 14: Tasche
- 15: Einfräsung
- 16: Lappen
- 17: Anlauffläche
- 18: Überbrückung
- 19: Pendelrollenlager
- 20: Lagerringe
- 21: Wälzkörper

## Patentansprüche

1. Verfahren zur Herstellung eines Pendelrollenlagerkäfigs,
bei welchem ein rohrförmiger Käfigrohling 1.n mit einem ersten und einem zweiten Rand 4, 5 und einem inneren und einem äußeren Umfangsrand 2, 3 und ein Fräser 6.n bereitgestellt werden, wobei der Fräser 6.n einen Antriebsschaft 7 und Schneidflächen S aufweist,
**dadurch gekennzeichnet,**
**dass** der Fräser 6.n , welcher einen axial an den Antriebsschaft 7 anschließenden ersten Konus 8, einen an die Großdurchmesserseite des ersten Konus 8 anschließenden ersten Zylinder 10, einen zweiten Konus 9, dessen Großdurchmesserseite in Richtung der Großdurchmesserseite des ersten Konus 8 weist, und einen zweiten Zylinder 11, welcher gegenüber dem Durchmesser D1 des ersten Zylinders einen verminderten Durchmesser D3 hat und welcher innerhalb der axialen Erstreckung des ersten Zylinders 10 zwischen den beiden Großdurchmesserseiten der beiden Konen 8, 9 angeordnet ist, und welcher mindestens an den Mantelflächen der beiden Konen 8, 9 und der beiden Zylinder 10, 11 Schneidflächen S aufweist, radial solange gegen die Mittelachse M des Käfigrohlings 1.n verfahren wird, bis die Drehachse DA des Fräsers 6.n eine Position eingenommen hat, die zwischen dem inneren und dem äußeren Umfangsrand 2, 3 des Käfigrohlings 1.n liegt,
**dass** dann der Fräser 6.n in der im Käfigrohling 1.n eingetauchten Position axial gegen den zweiten Rand 5 verfahren wird,
**dass** anschließend der Fräser 6.n axial gegen den ersten Rand 4 verfahren wird, bis dieser wieder eine Position eingenommen hat, den dieser vor dem axialen Verfahren gegen den zweiten Rand 5 hatte, und
**dass** dann der Fräser 6.n radial aus dem Käfigrohling 1.n herausgefahren wird.

2. Verfahren nach Anspruch 1
**dadurch gekennzeichnet,**
**dass** der zweite Zylinder 11 des Fräsers 6.n unmittelbar an die Großdurchmesserseite des zweiten Konus 9 des Fräsers 6.n anschließt,
**dass** die axiale Breite L1 des ersten Zylinders 10 der axialen Breite L2 des zweiten Zylinders 11 entspricht, und
**dass** der Fräser 6.n axial gegen den zweiten Rand 5 um das Maß der axialen Breite L1 des ersten Zylinders 10 verfahren wird.

3. Verfahren nach Anspruch 1 oder Anspruch 2
durch gekennzeichnet,
dass die Eindringtiefe T der Drehachse DA des Fräsers 6.n gleich oder kleiner dem Durchmesser D5 der Konen 8, 9 an deren Kleindurchmesserseite ist.

4. Verfahren nach Anspruch 1 oder Anspruch 3
**dadurch gekennzeichnet,**
**dass** die Mantelfläche des axial an die Kleindurchmesserseite des ersten Konus 8 anschließenden Antriebsschafts 7 ebenfalls eine Schneidfläche S aufweist.

5. Verfahren nach einem der Ansprüche 1 bis 4
**dadurch gekennzeichnet,**
**dass** auch die beiden Stirnflächen des ersten Konus 8 und zumindest die Kleindurchmesserstirnfläche des zweiten Konus Schneidflächen S aufweist.

6. Verfahren nach einem der Ansprüche 1 bis 5
**dadurch gekennzeichnet,**
**dass** der Käfigrohling 1.2 vorgebildete Taschen 14'aufweist.

7. Wälzlagerkäfig, hergestellt nach einem der Ansprüche 1 bis 7.

8. Pendelrollenlager, enthaltend einen Wälzlagerkäfig entsprechend Anspruch 7
**dadurch gekennzeichnet,**
**dass** jeder der beiden Lagerringe 20 außenbordfrei ausgebildet ist.

## Claims

1. A method for manufacturing a spherical roller bearing cage,
in which a tubular cage blank 1.n with a first and a second edge 4, 5 and an inner and an outer peripheral edge 2, 3 and a milling cutter 6.n are provided, wherein the milling cutter 6.n has a drive shaft 7 and cutting surfaces S,
**characterised in that**
the milling cutter 6.n, which has a first cone 8 axially adjoining the drive shaft 7, a first cylinder 10 adjoining the large-diameter side of the first cone 8, a second cone 9, the large-diameter side of which faces in the direction of the large-diameter side of the first cone 8, and a second cylinder 11, which has a smaller diameter D3 than the diameter D1 of the first cylinder and which is arranged within the axial extent of the first cylinder 10 between the two large-diameter sides of the two cones 8, 9, and which, at least on the lateral surfaces of the two cones 8, 9 and the two cylinders 10, 11, has cutting surfaces S, is moved radially against the central axis M of the cage blank 1.n until the axis of rotation DA of the milling cutter 6.n has assumed a position between the inner and outer peripheral edge 2, 3 of the cage blank 1.n,
the milling cutter 6.n is then moved axially against the second edge 5 in the position immersed in the cage blank 1.n,
the milling cutter 6.n is then moved axially against the first edge 4 until it has again assumed a position that it had before the axial movement against the second edge 5, and
the milling cutter 6.n is then moved radially out of the cage blank 1.n.

2. The method according to claim 1,
**characterised in that**
the second cylinder 11 of the milling cutter 6.n directly adjoins the large-diameter side of the second cone 9 of the milling cutter 6.n,
the axial width L1 of the first cylinder 10 corresponds to the axial width L2 of the second cylinder 11, and
the milling cutter 6.n is moved axially against the second edge 5 by the amount of the axial width L1 of the first cylinder 10.

3. The method according to claim 1 or claim 2,
**characterised in that**
the penetration depth T of the axis of rotation DA of the milling cutter 6.n is equal to or smaller than the diameter D5 of the cones 8, 9 at their small-diameter side.

4. The method according to claim 1 or claim 3,
**characterised in that**
the lateral surface of the drive shaft 7 axially adjoining the small-diameter side of the first cone 8 also has a cutting surface S.

5. The method according to any one of claims 1 to 4,
**characterised in that**
the two end faces of the first cone 8 and at least the small-diameter end face of the second cone also have cutting surfaces S.

6. The method according to any one of claims 1 to 5,
**characterised in that**
the cage blank 1.2 has pre-formed pockets 14'.

7. A rolling bearing cage manufactured according to any one of claims 1 to 7.

8. A spherical roller bearing containing a rolling bearing cage according to claim 7,
**characterised in that**
each of the two bearing rings 20 is designed without outer rims.

## Revendications

1. Procédé de production d'une cage de roulement à rouleaux sphériques,
dans lequel une ébauche de cage tubulaire 1.n avec un premier et un second bord 4, 5 et un bord périphérique interne et un bord périphérique externe 2, 3 et une fraise 6.n sont fournis, la fraise 6.n ayant un arbre d'entraînement 7 et des surfaces de coupe S,
**caractérisé**
**en ce que** la fraise 6.n, qui présente un premier cône 8 axialement attenant à l'arbre d'entraînement 7, un premier cylindre 10 attenant au côté de grand diamètre du premier cône 8, un second cône 9 dont le côté de grand diamètre pointe en direction du côté de grand diamètre du premier cône 8 et un second cylindre 11, qui a un diamètre D3 plus petit que le diamètre D1 du premier cylindre et qui est disposé dans l'étendue axiale du premier cylindre 10 entre les deux côtés de grand diamètre des deux cônes 8, 9 et qui présente au moins sur les surfaces extérieures des deux cônes 8, 9 et des deux cylindres 10, 11 des surfaces de coupe S, est déplacée radialement contre l'axe central M de l'ébauche de cage 1.n jusqu'à ce que l'axe de rotation DA de la fraise 6.n ait pris une position située entre le bord périphérique interne et le bord périphérique externe 2, 3 de l'ébauche de cage 1.n,
**en ce que** la fraise 6.n est alors déplacée axialement contre le second bord 5 en position enfoncée dans l'ébauche de cage 1.n,
**en ce que** la fraise 6.n est alors déplacée axialement contre le premier bord 4 jusqu'à ce qu'elle reprenne une position qu'elle avait avant le déplacement axial contre le second bord 5 et
**en ce que** la fraise 6.n est alors déplacée radialement hors de l'ébauche de cage 1.n.

2. Procédé selon la revendication 1
**caractérisé**
**en ce que** le second cylindre 11 de la fraise 6.n jouxte directement le côté de grand diamètre du second cône 9 de la fraise 6.n,
**en ce que** la largeur axiale L1 du premier cylindre 10 correspond à la largeur axiale L2 du second cylindre 11 et
**en ce que** la fraise 6.n est déplacée axialement contre le second bord 5 de la quantité de la largeur axiale L1 du premier cylindre 10.

3. Procédé selon la revendication 1 ou la revendication 2
**caractérisé**
**en ce que** la profondeur de pénétration T de l'axe de rotation DA de la fraise 6.n est égale ou inférieure au diamètre D5 des cônes 8, 9 au niveau de leur côté de petit diamètre.

4. Procédé selon la revendication 1 ou la revendication 3
**caractérisé**
**en ce que** la surface extérieure de l'arbre d'entraînement 7 axialement attenant au côté de petit diamètre du premier cône 8 présente également une surface de coupe S.

5. Procédé selon l'une quelconque des revendications 1 à 4
**caractérisé**
**en ce que** les deux faces avant du premier cône 8 et au moins la face avant de petit diamètre du second cône ont également des surfaces de coupe S.

6. Procédé selon l'une quelconque des revendications 1 à 5
**caractérisé**
**en ce que** l'ébauche de cage 1.2 présente des poches préformées 14'.

7. Cage de roulement produite selon l'une quelconque des revendications 1 à 7.

8. Roulement à rouleaux sphériques contenant une cage de roulement selon la revendication 7
**caractérisé**
**en ce que** chacune des deux bagues de roulement 20 est conçue sans bord externe.
